# EUROPÄISCHE PATENTSCHRIFT

(11) **EP 0 708 937 B1**
(45) Veröffentlichungstag und Bekanntmachung des Hinweises auf die Patenterteilung: **07.01.1998**
(21) Anmeldenummer: 94924251.5
(22) Anmeldetag: 15.07.1994
(51) Int. Cl.: G05B 19/18

(54) **VERFAHREN UND VORRICHTUNG ZUM STEUERN VON BEWEGUNGEN UND/ODER PROZESSEN EINES WERKZEUGS**
METHOD AND DEVICE FOR CONTROLLING THE MOVEMENTS AND/OR OPERATIONS OF A TOOL
PROCEDE ET DISPOSITIF PERMETTANT DE PILOTER LES MOUVEMENTS ET/OU LES OPERATIONS EFFECTUES PAR UN OUTIL

(30) Priorität: 16.07.1993 DE 4323950
(43) Veröffentlichungstag der Anmeldung: 01.05.1996
(73) Patentinhaber: KUKA Schweissanlagen GmbH, 86165 Augsburg (DE)
(72) Erfinder: RIPPL, Peter, D-86163 Augsburg (DE); LIEPERT, Bernd, D-86405 Meitingen (DE); POSTENRIEDER, Eduard, D-86438 Kissing (DE)
(74) Vertreter: Ernicke, Hans-Dieter, Dipl.-Ing.
(86) Internationale Anmeldenummer: EP9402332
(87) Internationale Veröffentlichungsnummer: WO9502856

(56) Entgegenhaltungen:
- US-A- 4 538 233
- PATENT ABSTRACTS OF JAPAN vol. 17, no. 189 (P-1521) 13. April 1993 & JP,A,04 340 128 (FUJI XEROX CO. LTD.) 26. November 1992
- PATENT ABSTRACTS OF JAPAN vol. 12, no. 400 (M-756) 24. Oktober 1988 & JP,A,63 144 950 (TOSHIBA CORP.) 17. Juni 1988
- PATENT ABSTRACTS OF JAPAN vol. 14, no. 449 (P-1111) 26. September 1990 & JP,A,02 178 806 (FANUC LTD.) 11. Juli 1990
- PATENT ABSTRACTS OF JAPAN vol. 10, no. 157 (P-464) (2213) 6. Juni 1986 & JP,A,61 011 815 (KOBE SEIKOSHO K.K.) 20. Januar 1986

## Beschreibung

Die Erfindung betrifft ein Verfahren und eine Vorrichtung zum Steuern von Bewegungen und/oder Prozessen eines Werkzeugs, das von einem Manipulator entlang einer vorgegebenen Bahn bewegt wird.

Ein solches Verfahren und eine solche Vorrichtung sind aus der US-C-4 538 233 bekannt. Sie zeigt ein Verfahren zum Steuern der Bewegungen eines bahngeführten Werkzeuges an einem Manipulator, bei dem der vorgegebenen geradlinigen Bewegungsbahn quergerichtete Pendelbewegungen des Schweißwerkzeugs überlagert werden. Die Steuerung erfolgt über einen Rechner im Manipulator. Die Synchronisation des Bahnvorschubs und der Pendelbewegungen erfolgen über die Zeit. Das Pendelmuster wird über die gesamte Bahnlänge definiert, wobei die Pendelbewegung mehrmals ausgeführt werden kann. Aus dieser Definition wird auf Wegeinheiten zurückgerechnet, indem die für eine Wegeinheit bestimmte Pendelbewegung als Prozentzahl einer vollen Schwingung des Pendelmusters ausgegeben wird.

Die Prozeßsteuerung beim Schutzgasschweißen erfolgt in einer eigenen Schweißstromsteuerung. Hier werden die Schweißparameter bzw. die Pulsparameter eingestellt. In der einfachsten Ausführungsform werden die Prozeßparameter einmal eingestellt und bleiben während des gesamten Schweißprozesses ungeändert. In der Praxis ist es in einer Weiterentwicklung auch bekannt, zwei Sätze von Schweiß- oder Prozeßparametern zu speichern und bei Bedarf umzuschalten. Dies erfolgt ebenfalls in der separaten Schweißstromsteuerung. Die Umschaltung der Prozeßparameter erfolgt zeitabhängig und ohne Synchronisation mit der Düsenbewegung beim Bahnvorschub und Pendeln. Die Folge ist, daß es durch Toleranzen im Zeittakt allmählich zu einem asynchronen Verhalten kommt und die Prozeßparameter nicht mehr mit den Werkzeugbewegungen übereinstimmen.

Es ist Aufgabe der vorliegenden Erfindung, eine bessere und genauere Möglichkeit zum Steuern von Bewegungen und/oder Prozessen des Werkzeugs aufzuzeigen.

Die Erfindung löst diese Aufgabe mit den Merkmalen im Verfahrens- und Vorrichtungshauptanspruch.

Erfindungsgemäß werden die Bewegungen und/oder Prozesse des Werkzeugs von einem Funktionsgenerator gemeinsam gesteuert und synchronisiert. Dadurch kann es nicht mehr zu Abweichungen zwischen den Bewegungen und/oder den Prozessen kommen. Der Funktionsgenerator überlagert die gemeinsam und synchron ablaufenden Funktionen der Bewegungen und/oder Prozesse dem Bahnvorschub. Dabei können beliebige Bewegungs- und/oder Prozeßfunktionen vom Funktionsgenerator gesteuert werden. Auf diese Weise lassen sich auch verschiedene Einzelbewegungen des Werkzeugs eingeben und in einer komplexen Gesamtbewegung mit dem Bahnvorschub überschleifen. Desgleichen können auch verschiedene Prozeßparameter gemeinsam oder separat gesteuert werden.

Das erfindungsgemäße Verfahren und die zugehörige Vorrichtung eignen sich besonders für das Schutzgasschweißen, insbesondere das WIG-, MIG- oder MAG-Schweißen. Ein bevorzugter Einsatzbereich liegt auch beim Kleben. Darüber hinaus ist der Einsatzbereich beliebig auf alle Arten von Werkzeugen erweiterbar, die vom Manipulator entlang einer anhand des Werkstücks vorgegebenen und programmierten Bahn bewegt werden.

Der Funktionsgenerator ist vorzugsweise in die Manipulatorsteuerung integriert. Er besteht aus einem Rechner mit mindestens einem Prozessor und mindestens einem Datenspeicher sowie der zugehörigen Software. Bei der vorerwähnten Integration kann auf den Rechner in der Manipulatorsteuerung zurückgegriffen werden.

Die Synchronisation der Bewegungen und/oder Prozesse des Werkzeugs erfolgt über den Weg des Bahnvorschubs.

In einer vorteilhaften Ausgestaltung der Erfindung werden über eine besonders bedienungsfreundliche Benutzeroberfläche mit Fenstern normierter Größe die Parameter der verschiedenen Bewegungen und/oder Prozesse eingegeben. Unter Einbeziehung von vorgegebenen Bezugsgrößen für Offsetfaktoren, Verstärkungsfaktoren oder dergleichen werden vom Funktionsgenerator daraus die Bewegungs- und/oder Prozeßfunktionen berechnet. Diese Form der Dateneingabe ist besonders benutzerfreundlich und läßt auch eine einfache und übersichtliche Programmierung zu. Die Bewegungs- oder Prozeßparameter können auf unterschiedliche Weise eingegeben, gespeichert und auch generiert werden. Beispielsweise ist auch eine Ermittlung und Eingabe der Parameter von einem externen Sensor möglich, was eine besonders flexible Steuerung erlaubt.

Der funktionsgenerator verfügt über geeignete Schnittstellen zur Eingabe der Parameter und zur Ausgabe der Funktionen. Er kann die Funktionen direkt in die Bahnsteuerung einspeisen und dem Bahnvorschub direkt überlagern. Über die Prozeßfunktionen wird eine Schweißstromquelle oder eine sonstige je nach Werkzeug vorhandene Betriebmittelquelle vorzugsweise direkt angesteuert.

Mit dem erfindungsgemäßen Verfahren und der zugehörigen Vorrichtung ist es insbesondere für das Schutzgasschweißen möglich, das sogenannte Geometriependeln, das Geschwindigkeitspendeln und das Technologiependeln einzeln oder in beliebiger Kombination zu realisieren.

Beim Geometriependeln kann das Werkzeug beliebige seitliche Auslenkungen von der verfolgten Bahn ausführen. Die Auslenkungen können z.3. nach Frequenz, Amplitude und Kurvenform variiert werden, um besonderen Schweißbedingungen, wie unterschiedlichen Blechdicken, Spalten etc. gerecht zu werden und trotz der erschwerten Bedingungen ein einwandfreies Schweißergebnis zu liefern. Beispielsweise kann hierdurch die Wärmeeinbringung im Werkstück optimiert werden.

Beim Geschwindigkeitspendeln werden dem Bahnvorschub abwechselnd eine Beschleunigungs- und Bremskomponente in Bahnrichtung überlagert. Es kann sich auch um eine Start/Stop-Bewegung oder um kombinierte Bewegungen handeln. Hierdurch lassen sich z.B. bei einem konstanten Prozeß Schuppen in der Schweißnaht erzeugen.

Beim Technologiependeln läßt man die Prozeßparameter schwanken, indem z.3. der Schweißstrom abwechselnd hoch und tief geschaltet wird. Besonders vorteilhaft ist es, die Prozeßparameter, wie z.B. Strom, Pulsbreite oder Drahtvorschub, exakt und synchron zur einer oder mehreren mechanischen Pendelbewegungen zu steuern.

Mit dem erfindungsgemäßen Verfahren lassen sich Schweißergebnisse erzielen, die bislang nur mit qualitativ deutlich höherwertigen und aufwendigen Schweißverfahren erzielbar waren.

Die Erfindung ist in den Zeichnungen beispielsweise und schematisch dargestellt. Im einzelnen zeigen
- Fig. 1:: einen Manipulator mit einem Werkzeug und einem Funktionsgenerator,
- Fig. 2:: den inneren Blockaufbau des Funktionsgenerators und
- Fig. 3 und 4:: Fenster mit verschiedenen Funktionsbeispielen.

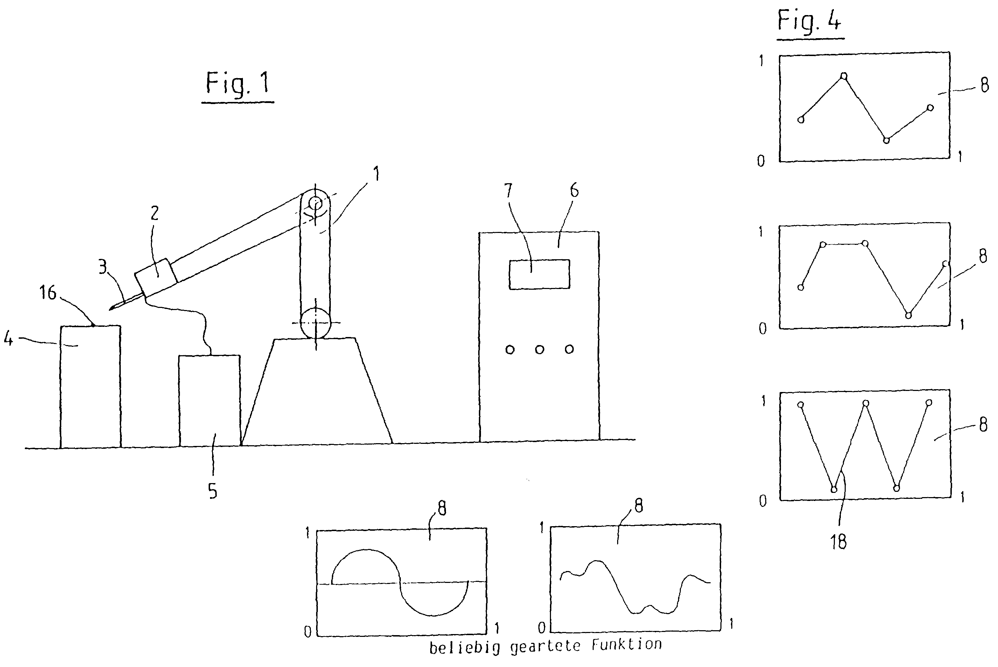

Fig. 1 zeigt in einer schematischen Anordnung einen mehrachsigen Manipulator (1), vorzugsweise einen sechs- oder mehrachsigen Industrieroboter, der an seiner Hand (2) ein Werkzeug (3) angeflanscht hat. Der-Manipulator (1) führt das Werkzeug (3) entlang einer vorgegebenen Bahn (16) an einem Werkstück (4). Im gezeigten Ausführungsbeispiel handelt es sich um eine Schutzgas-Schweißeinrichtung mit einer Schweißstromquelle (5), die mit dem als Schweißdüse ausgebildeten Werkzeug (3) verbunden ist. Zu der Anordnung gehören noch eine Schutzgasquelle und gegebenenfalls eine Versorgung und ein Antrieb für einen Schweißdraht, der an der Schweißdüse (3) austritt. Letztere sind der Übersicht halber nicht dargestellt.

Der Manipulator (1) besitzt eine Manipulatorsteuerung (6), die einen Rechner mit mindestens einem Prozessor und einem oder mehreren Datenspeichern für Programme, Parameter und dergleichen Daten aufweist. In der Manipulatorsteuerung (6) ist die zu verfolgende Bahn (16) in ihrem Verlauf und ihrer Lage am Werkstück (4) gespeichert. Die Bahn (16) besteht beispielsweise aus einer Schweißnaht. Durch geeignete Maßnahmen wird die Ist-Lage der Bahn (16) gesucht und die gespeicherte Soll-Lage in der Manipulatorsteuerung (6) entsprechend abgeglichen. Danach verfolgt der Manipulator (1) exakt die programmierte Bahn (16).

Im gezeigten Ausführungsbeispiel soll das Werkzeug (3) während des Bahnvorschubs mechanische Pendelbewegungen quer zur Bahn (16) ausführen (sog. Geometriependeln). Zugleich sollen entsprechend der mechanischen Pendelbewegungen die Prozeßparameter verändert werden (sog. Technologiependeln). Hierzu können beispielsweise Strom, Pulsbreite und/oder Drahtvorschub variiert werden. So sollen z.B. die Prozeßparameter an den Endstellen der Pendelauslenkung kleiner als im Mittelbereich beim Überstreichen der Bahn (16) bzw. Naht sein. Die Prozeßparameter sollen also abhängig von der Pendelbewegung verändert werden. Auf diese Weise wird z.B. der Energieeintrag an der Schweißstelle optimiert.

Zur Steuerung der Bewegung und/oder des Prozesses ist ein Funktionsgenerator (7) vorgesehen. Er kann auch mehrere Bewegungen und mehrere Prozesse gleichzeitig und synchron steuern.

Der Funktionsgenerator (7) ist in der Manipulatorsteuerung (6) angeordnet. Er kann aber auch alternativ extern angeordnet sein. Er besteht ebenfalls aus einem Rechner mit mindestens einem Prozessor und einem oder mehreren Datenspeichern sowie zugehöriger Software. In der bevorzugten integrierten Ausführungsform kann der Funktionsgenerator (7) auf die Hardware der Manipulatorsteuerung (6) zurückgreifen. Er kann dann als Softwarefunktion in der Manipulatorsteuerung (6) realisiert sein.

Die verschiedenen Parameter für die Bewegungen und/oder Prozesse werden in mehreren Funktionsabschnitten gleicher oder zumindest proportionaler Größe eingegeben. Dies geschieht über eine Benutzeroberfläche, die Fenster (8) mit normierter Größe zur Verfügung stellt. Der Funktionsgenerator (7) verfügt im gezeigten Ausführungsbeispiel über drei Fenster (8), in die verschiedene Parameter für unterschiedliche Bewegungen und/oder Prozesse eingegeben werden können. Die Fensterzahl kann bei geeigneter Auslegung von Hardware und Software beliebig kleiner oder größer sein.

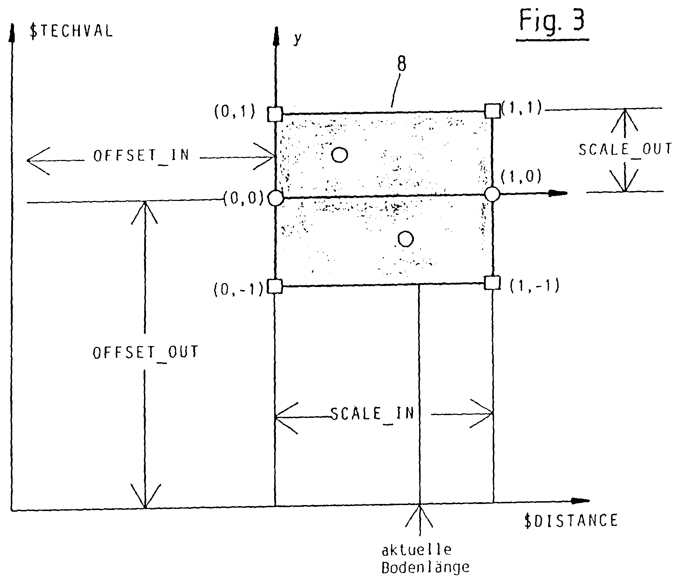

Wie Fig. 3 und 4 verdeutlichen, werden die Parameter als Wertepaare in den normierten Fenstern (8) eingegeben. Hierbei handelt es sich um qualitative Daten. Sie werden durch Bezugsgrößen, insbesondere Offsetfaktoren und/oder Verstärkungsfaktoren quantifiziert.

Aus den einzelnen Wertepaaren bzw. Parametern können im Funktionsgenerator (7) sogenannte Splines (18) errechnet werden. Bei den oberen drei Fenstern (8) im gezeigten Ausführungsbeispiel der Fig. 4 handelt es sich um Polygonzüge zwischen den Wertepaaren, die als Spline 1-sten Grades realisiert sind. Bei entsprechender Auslegung von Hard- und Software können mit entsprechend aufwendigen Polynomen und Interpolationsgraden Splines höheren Grades, z.B. 2-ten und 3-ten Grades, berechnet werden. Im Fenster (8) werden die Parameter als Wertepaare in dem durch die Eckwerte (0,-1), (0,1), (1,1) und (1,-1) beschriebenen Bereich eingegeben. Sie stellen sich als Wertepaar (x, y) dar, wobei x eine reelle Zahl aus dem Interval (0,1) und y eine reelle Zahl aus dem Intervall (-1,1) ist. Der erste und der letzte Parameter sollten auf dem Rand des Definitionsbereiches bzw. Fensters (8) liegen. Die x-Werte der einzelnen Parameter sollten stetig fortschreiten.

Fig. 4 verdeutlicht in den unteren Darstellungen, daß die Funktionen beliebige Kurven mit symmetrischem oder asymmetrischem Verlauf beschreiben können. Es kann sich um dreieckige, trapezförmige, sinusförmige oder beliebig andere Kurvenformen handeln.

Die in Fig. 3 angegebenen Bezugsgrößen für OFFSET und SCALE haben folgende Bedeutung:

Die Bezugsgröße SCALE_IN stellt einen Realwert dar, mit dem der Definitionsbereich des Splines (18) bezogen auf die Technologieklasse skaliert werden kann. Das Fenster (8) bzw. der zugehörige Funktionsabschnitt können dadurch je nach Art der Parameter gegenüber anderen verkleinert oder vergrößert werden. Dadurch läßt sich beispielsweise die Wiederholfrequenz verändern, so daß Prozeßfunktionen mit mehrfacher Frequenz gegenüber Bewegungsfunktionen ablaufen.
Die Bezugsgröße SCALE_OUT definiert einen Realwert, mit dem der Wertebereich des Splines bezogen auf die Technologieklasse skaliert werden kann. Dies ist ein auf die Art der Parameter bezogener Verstärkungsfaktor. Bewegungs- und Prozeßparameter werden hierdurch zwar im gleichen normierten Fenster (8) eingegeben, dann aber mit unterschiedlichen Verstärkungsfaktoren quantifiziert.

Die Bezugsgröße OFFSET_IN stellt einen Realwert dar, mit dem der Nullpunkt des Definitionsbereiches des Splines (18) abhängig von der Technologieklasse verschoben werden kann. Damit läßt sich der Start einer Funktion verschieben, insbesondere verzögern. Bewegungen und/oder Prozesse können dadurch versetzt zueinander ablaufen.

Die Bezugsgröße OFFSET_OUT definiert einen Realwert, mit dem der Nullpunkt des Wertebereichs des Splines (18) abhängig von der Technologieklasse verschoben werden kann. OFFSET_OUT stellt die Bezugslinie der Parameter ein, während SCALE_OUT die Amplitude der Funktion quantifiziert.
Aus den Wertepaaren in den Fenstern (8) und den hieraus gewonnenen Splines (18) werden mit den vorerwähnten Bezugsgrößen Funktionen für die Bewegungen und/oder Prozesse berechnet. Die Funktionen laufen in den eingangs erwähnten Funktionsabschnitten synchron ab. Die Synchronisation erfolgt über den Weg des Bahnvorschubs (16). Zu Beginn des Schweißjobs steht das Werkzeug (3) am Ausgangspunkt der Bahn (16) bzw. Naht bereit und auch die Schweißstromquelle (5) ist in Betrieb und in Bereitschaft.

Der Funktionsgenerator (7) startet vorzugsweise mit Beginn der Manipulatorbewegung (1) entlang der Bahn (16) die erwähnten Funktionsabschnitte. Der Start erfolgt gleichzeitig, wobei die Funktionsabschnitte mit den darin vorgegebenen Funktionen synchron und simultan abgearbeitet werden. Die Funktionsabschnitte werden am Ende gemeinsam und zugleich abgeschlossen und erneut gestartet. Dadurch werden die Funktionsabschnitte zyklisch wiederholt, wobei sich Start und Ende nach dem Synchronisationsbezug, hier dem Bahnvorschub richten. Der Zyklus bzw. der Takt bleiben vorzugsweise gleich.

Die Parameter bzw. die daraus berechneten Funktionen bleiben zumindest für die Dauer des Funktionsabschnittes im Funktionsgenerator (7) gespeichert. Je nach Komplexität der Bewegungen und/oder Prozesse können die Funktionen wiederholt oder verändert werden. Im einfachsten Fall wird die gleiche Funktion ständig wiederholt, indem beispielsweise eine gleichbleibende, mit jedem Funktionsabschnitt sich periodisch wiederholende Pendelbewegung erzeugt wird.

Es ist aber auch möglich, die Funktionen permanent oder periodisch zu verändern. Hierzu können die Funktionen oder die Wertepaare bzw. Parameter in Datenspeichern festgehalten und nach Vorgabe eines Programms einzeln und selektiv abgerufen werden. Hierbei können im einfachsten Fall die Parameter eingegeben und hieraus im Funktionsgenerator (7) Funktionen berechnet werden. Alternativ können auch gleich die fertigen Funktionen bereitgestellt und eingespielt werden.

In einer weiteren Abwandlung können die Wertepaare oder Parameter extern von einem Meßgerät, beispielsweise einem Sensor, eingegeben werden. Hierdurch lassen sich die berechneten Splines an eventuelle Abweichungen in der Bahn (16), dem Werkstück (4), dem Werkzeug (3) oder sonstige veränderliche äußere Begebenheiten und Einflüsse anpassen.

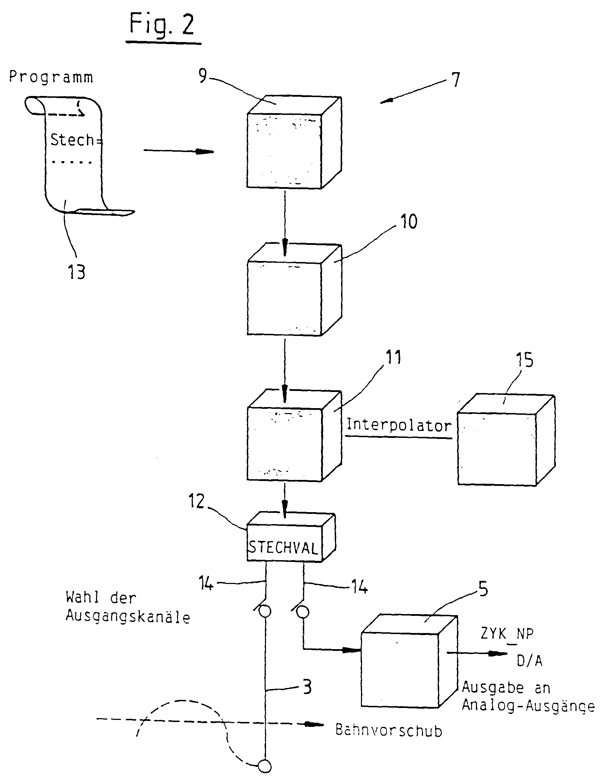

Die Parameter bzw. Wertepaare werden mittels einer Schnittstelle (13) in den Funktionsgenerator (7) eingegeben. In Fig. 2 ist beispielsweise ein Programm angegeben. Es kann aber auch eine Tastatur, ein Zeigegerät, ein Sensor oder ein sonstiges geeignetes Eingabemittel sein. Der Funktionsgenerator (7) hat ein oder mehrere Schnittstellen (14) zur Ausgabe der Funktionen. Die Prozeßfunktionen, z.B. Funktionen von Strom oder Pulsbreite beim Pulsschweißen mit Schutzgas werden beispielsweise an die Schweißstromquelle (5) übermittelt, die dadurch entsprechend gesteuert wird. In gleicher Weise kann auch eine Schnittstelle (14) für den Drahtvorschub (nicht dargestellt) vorhanden sein. Eine dritte Schnittstelle (14) geht über ein sogenanntes Technologiedreibein auf die Manipulatorsteuerung (6) und die dort integrierte Bahnsteuerung. Den aus der programmierten Bahn ermittelten Koordinaten des Werkzeugbezugspunktes, dem sogenannten TCP, werden die aus den Bewegungsfunktionen hervorgehenden Werte überlagert und damit neue Koordinaten gebildet. Durch die Überlagerung werden der Bahnvorschub (16) und die Pendelbewegung (17) zur einer komplexen Bewegung überschliffen. Hierbei können auch mehrere Bewegungsfunktionen einander überlagert werden.

Fig. 2 verdeutlicht den Blockaufbau des Funktionsgenerators (7). Er besteht aus einem Interpreter (9), in dem die eingegebenen Parameter bzw. Wertepaare mit einem Satzbezug zur Technologie-Funktion versehen werden. Der Interpreter (9) leitet die Daten an eine Präparation (10) weiter, die die Splines (18) aus den Werte-Paar-Mengen berechnet. Die berechneten Splines werden dann an einen Interpolator (11) übermittelt, der die Splines anhand der in einem Datenspeicher (15) und/oder gegebenenfalls einem Programm niedergelegten Bezugsgrößen quantifiziert und hieraus die Funktionswerte der Bewegungen und/oder Prozesse berechnet. Mit (12) sind Variablen zur Aufnahme der vorgenannten Funktionswerte und zur Übermittlung über die Schnittstellen (14) bezeichnet. Bei Bedarf können die Systemvariablen über eine Analogausgabe ausgegeben werden und sind dann Istwert-bezogen.

Die Komponenten (9) bis (14) des Funktionsgenerators (7) sind hardwaremäßig oder softwaremäßig realisiert. Hinzu kommt noch eine optische Anzeige für die Darstellung der Fenster (8), der Parameter bzw. Wertepaare und der Splines (18). Über die Anzeige können gegebenenfalls auch analog zu Fig. 3 die Bezugsgrößen nebst Koordinatensystem ausgegeben werden. Vorzugsweise können alle Fenster (8) nebeneinander dargestellt werden. Vorzugsweise ist aber ein Raster oder ein anderes Bezugssystem zur optischen Korelation der Wertepaare in den einzelnen Fenstern (8) vorgesehen.

Abwandlungen des vorbeschriebenen Ausführungsbeispiels sind in verschiedener Weise möglich.
Außer den Änderungen der Bearbeitungsprozesse und -bewegungen können die Zahl der Fenster (8) bzw. Funktionsabschnitte variiert werden. Über die Fenster (8) können Parameter über jeweils unterschiedliche Bewegungen und/oder Prozesse eingegeben werden. Es ist aber auch möglich, hier mehrere unterschiedliche Funktionsabschnitte der gleichen Bewegung bzw. des gleichen Prozesses darzustellen, um so die vorgenommenen Veränderungen innerhalb des Funktionsablaufs zu visualisieren. In der bevorzugten Ausführungsform werden zudem die Bewegungen und/oder Prozesse als zweidimensionale Parameter eingegeben. Für eine räumliche Bewegung werden dazu zwei oder mehr ebene Bewegungen definiert und einander überlagert. Alternativ ist es bei entsprechend ausgestatteter Hard- und Software auch möglich, komplexere Funktionen zu schaffen und dreidimensionale Werte einzugeben.

### BEZUGSZEICHENLISTE

- 1: Manipulator, Roboter
- 2: Hand
- 3: Werkzeug, Schweißwerkzeug
- 4: Werkstück
- 5: Betriebsmittelquelle, Schweißstromquelle
- 6: Manipulatorsteuerung
- 7: Funktionsgenerator
- 8: Fenster
- 9: Interpreter
- 10: Präparation
- 11: Interpolator
- 12: Variable
- 13: Schnittstelle, Eingabe
- 14: Schnittstelle, Ausgabe
- 15: Datenspeicher
- 16: Bahn, Bahnvorschub
- 17: Pendelbewegung
- 18: Spline

## Patentansprüche

1. Verfahren zum Steuern von Bewegungen und/oder Prozessen eines Werkzeugs (3), das von einem Manipulator (1) entlang einer vorgegebenen Bahn bewegt wird, dadurch **gekennzeichnet**, daß
- mehrere verschiedene Bewegungen und/oder Prozesse des Werkzeugs (3) von einem Funktionsgenerator (7) gemeinsam synchron gesteuert und dem Bahnvorschub überlagert werden,
- die verschiedenen Funktionen der gemeinsam zu synchronisierenden Bewegungen und/oder Prozesse in jeweils eigenen Funktionsabschnitten gleicher oder zumindest proportionaler Größe eingegeben sowie zumindest zeitweise gespeichert werden und
- die Funktionsabschnitte über den Weg des Bahnvorschubs synchronisiert werden.

2. Verfahren nach Anspruch 1, dadurch **gekennzeichnet**, daß die Funktionsabschnitte vom Funktionsgenerator (7) gemeinsam gestartet und synchron im wiederholten Zyklus ausgeführt werden.

3. Verfahren nach Anspruch 1 oder 2, dadurch **gekennzeichnet**, daß die Funktionen der Bewegungen und/oder Prozesse im Funktionsgenerator (7) aus eingegebenen oder programmierten Parametern berechnet werden.

4. Verfahren nach Anspruch 3, dadurch **gekennzeichnet**, daß die Parameter als qualitative Daten in einer Benutzeroberfläche mit Fenstern (8) normierter Größe eingegeben werden, wobei aus den Daten im Funktionsgenerator (7) Splines (18) berechnet werden.

5. Verfahren nach Anspruch 4, dadurch **gekennzeichnet**, daß Funktionswerte aus den Splines (18) mit einem Bezugswert für Offset- und/oder Verstärkungsfaktoren berechnet werden.

6. Verfahren nach einem der Ansprüche 1 bis 5, dadurch **gekennzeichnet**, daß die Parameter von Hand eingegeben und gespeichert werden.

7. Verfahren nach einem der Ansprüche 1 bis 5, dadurch **gekennzeichnet**, daß die Parameter von einem Programm eingegeben und verändert werden.

8. Verfahren nach einem der Ansprüche 1 bis 5, dadurch **gekennzeichnet**, daß die Parameter extern von einem Sensor eingegeben werden.

9. Vorrichtung zum Steuern von Bewegungen und/oder Prozessen eines Werkzeugs (3), das von einem Manipulator (1) entlang einer vorgegebenen Bahn bewegt wird, mit einem Funktionsgenerator (7), dadurch **gekennzeichnet**, daß der Funktionsgenerator (7)
- Mittel aufweist, die mehrere verschiedene Bewegungen und/oder Prozesse des Werkzeugs (3) gemeinsam synchron steuert und dem Bahnvorschub überlagert,
- eine Benutzeroberfläche mit mehreren normierten Fenstern (8) zur Eingabe der verschiedenen Funktionen der gemeinsam zu synchronisierenden Bewegungen und/oder Prozesse in jeweils eigenen Funktionsabschnitten gleicher oder zumindest proportionaler Größe aufweist,
- einen Rechner mit ein oder mehreren Datenspeichern (15) für die zumindest zeitweise Speicherung der Funktionsabschnitte besitzt und
- Mittel aufweist, die die Funktionsabschnitte über den Weg des Bahnvorschubs synchronisiert.

10. Vorrichtung nach Anspruch 9, dadurch **gekennzeichnet**, daß der Funktionsgenerator (7) in einer Manipulatorsteuerung (6) angeordnet ist.

11. Vorrichtung nach Anspruch 9 oder 10, dadurch **gekennzeichnet**, daß der Funktionsgenerator (7) einen Interpreter (9), einen Interpolator (11) aufweist, die miteinander und mit den Datenspeichern (15) signaltechnisch verbunden sind.

12. Vorrichtung nach Anspruch 9 oder einem der folgenden, dadurch **gekennzeichnet**, daß der Funktionsgenerator (7) mindestens eine Schnittstelle (13) zur Eingabe von Parametern für die Bewegungen und/oder Prozesse des Werkzeugs (3) und für Bezugsgrößen aufweist.

13. Vorrichtung nach Anspruch 9 oder einem der folgenden, dadurch **gekennzeichnet**, daß der Funktionsgenerator (7) mindestens eine Schnittstelle (14) zur Ausgabe von Funktionswerten für die Steuerung der Bewegungen und/oder Prozesse des Werkzeugs (3) aufweist.

## Claims

1. Method for controlling movements and/or processes of a tool (3) moved by a manipulator (1) along a preset path, characterised in that
- a plurality of different movements and/or processes of the tool (3) are controlled jointly and synchronously by a function generator (7) and superimposed on the tool feed,
- the different functions of the movements and/or processes to be jointly synchronised are input in respectively independent function sections of equal or at least proportional size and stored at least temporarily and
- the function sections are synchronised by way of the tool feed.

2. Method according to Claim 1, characterised in that the function sections are started jointly by the function generator (7) and executed synchronously in a repeated cycle.

3. Method according to Claim 1 or 2, characterised in that the functions of the movements and/or processes are calculated in the function generator (7) from input or programmed parameters.

4. Method according to Claim 3, characterised in that the parameters are input as qualitative data in a user surface with windows (8) of standardised size, splines (18) being calculated in the function generator (7) from the data.

5. Method according to Claim 4, characterised in that the function values are calculated from the splines (18) with a reference value for offset and/or amplification factors.

6. Method according to one of Claims 1 to 5, characterised in that the parameters are input and stored by hand.

7. Method according to one of Claims 1 to 5, characterised in that the parameters are input and changed by a program.

8. Method according to one of Claims 1 to 5, characterised in that the parameters are input externally by a sensor.

9. Apparatus for controlling movements and/or processes of a tool (3) moved by a manipulator (1) along a preset path, using a function generator (7), characterised in that the function generator (7)
- has means which control a plurality of different movements and/or processes of the tool (3) jointly and synchronously and superimpose them on the tool feed,
- has a user surface with a plurality of standardised windows (8) for inputting different functions of the movements and/or processes to be jointly synchronised in respectively independent function sections of equal or at least proportional size,
- possesses a computer with one or more data memories (15) for at least temporarily storing the function sections and
- has means which synchronise the function sections by way of the tool feed.

10. Apparatus according to Claim 9, characterised in that the function generator (7) is arranged in a manipulator controller (6).

11. Apparatus according to Claim 9 or 10, characterised in that the function generator (7) has an interpreter (9) and an interpolator (11) which are connected to one another and to the data memories (15) by a signal system.

12. Apparatus according to Claim 9 or one of the subsequent claims, characterised in that the function generator (7) has at least one interface (13) for inputting parameters for the movements and/or processes of the tool (3) and for reference quantities.

13. Apparatus according to Claim 9 or one of the subsequent claims, characterised in that the function generator (7) has at least one interface (14) for outputting function values for the control of the movements and/or processes of the tool (3).

## Revendications

1. Procédé pour commander des mouvements et/ou des opérations d'un outil (3) qui est déplacé par un manipulateur (1) le long d'une trajectoire prescrite, caractérisé par le fait que
- plusieurs mouvements et/ou opérations différents de l'outil (3) sont commandés ensemble et de manière synchrone par un générateur de fonctions (7) et sont superposés à l'avance suivant la trajectoire,
- on entre les différentes fonctions des mouvements et/ou opérations, à synchroniser ensemble, dans des sections de fonctions particulières de grandeur identique ou au moins de grandeur proportionnelle et on les mémorise au moins temporairement et
- on synchronise les sections de fonctions sur le parcours de l'avance suivant la trajectoire.

2. Procédé selon la revendication 1, caractérisé par le fait que l'on fait démarrer ensemble les sections de fonctions par le générateur de fonctions (7) et on les exécute de manière synchrone dans le cycle répété.

3. Procédé selon la revendication 1 ou 2, caractérisé par le fait que l'on calcule les fonctions des mouvements et/ou des opérations dans le générateur de fonctions (7) à partir de paramètres entrés ou programmés.

4. Procédé selon la revendication 3, caractérisé par le fait que l'on entre les paramètres sous forme de données qualitatives dans une interface utilisateur comportant des fenêtres (8) de grandeur normalisée, des fonctions spline (18) étant calculées à partir des données dans le générateur de fonctions (7).

5. Procédé selon la revendication 4, caractérisé par le fait que l'on calcule des valeurs de fonctions à partir des fonctions spline (18) avec une valeur de référence pour des facteurs de décalage et/ou d'amplification.

6. Procédé selon l'une des revendications 1 à 5, caractérisé par le fait que l'on entre les paramètres à la main et on les mémorise.

7. Procédé selon l'une des revendications 1 à 5, caractérisé par le fait que l'on entre et l'on mémorise les paramètres au moyen d'un programme.

8. Procédé selon l'une des revendications 1 à 5, caractérisé par le fait que l'on entre les paramètres depuis l'extérieur au moyen d'un capteur.

9. Dispositif pour commander des mouvements et/ou des opérations d'un outil (3) qui est déplacé par un manipulateur (1) le long d'une trajectoire prescrite, comportant un générateur de fonctions (7), caractérisé par le fait que le générateur de fonctions (7) comporte
- des moyens qui commandent plusieurs mouvements et/ou opérations différents de l'outil (3) ensemble et de manière synchrone et qui les superposent à l'avance suivant la trajectoire,
- une interface utilisateur comprenant plusieurs fenêtres (8) normalisées pour l'entrée des différentes fonctions des mouvements et/ou opérations à synchroniser ensemble dans des sections de fonctions particulières de grandeur identique ou au moins de grandeur proportionnelle,
- un ordinateur comportant une ou plusieurs mémoires de données (15) pour la mémorisation au moins temporaire des sections de fonctions et
- des moyens qui synchronisent les sections de fonctions sur le parcours de l'avance suivant la trajectoire.

10. Dispositif selon la revendication 9, caractérisé par le fait que le générateur de fonctions (7) est agencé dans une commande de manipulateur (6).

11. Dispositif selon la revendication 9 ou 10, caractérisé par le fait que le générateur de fonctions (7) comporte un interpréteur (9) et un interpolateur (11) qui sont reliés, pour la technique des signaux, l'un à l'autre et aux mémoires de données (15).

12. Dispositif selon la revendication 9 ou l'une des revendications suivantes, caractérisé par le fait que le générateur de fonctions (7) comporte au moins une interface (13) pour l'entrée de paramètres destinés aux mouvements et/ou aux opérations de l'outil (3) et à des grandeurs de référence.

13. Dispositif selon la revendication 9 ou l'une des revendications suivantes, caractérisé par le fait que le générateur de fonctions (7) comporte au moins une interface (14) pour la sortie de valeurs de fonctions destinées à la commande des mouvements et/ou des opérations de l'outil (3).
